# DEMANDE DE BREVET EUROPEEN

(11) **EP 0 901 954 A1**
(43) Date de publication de la demande: **17.03.1999**
(21) Numéro de dépôt: 98402119.6
(22) Date de dépôt: 26.08.1998
(51) Int. Cl.: B62D 55/24

(54) **Véhicule tout terrain à chenille souple**

(30) Priorité: 12.09.1997 FR 9711398
(71) Demandeur: Otico, 77650 Longueville (FR)
(72) Inventeur: Phely, Olivier, 77650 Sainte-Colombe (FR)
(74) Mandataire: Nicolle, Olivier

(57) **Abrégé**

La roue non motrice (100, 200) comporte au moins une surface de roulement (36) propre à recevoir la piste de roulement (34) de la bande sans fin. Cette surface de roulement comporte au moins un prolongement (40) qui s'étend radialement vers l'intérieur de la roue non motrice. Le prolongement est sensiblement parallèle à l'une des surfaces latérales (22) des plots, de manière à former un jeu latéral (JN) limité allant s'élargissant du pied vers le sommet du plot.

## Description

L'invention concerne un véhicule tout terrain à chenille souple, tel que notamment un engin agricole, viticole et ostréicole ou un engin de travaux publics et forestiers.

La présente invention concerne plus particulièrement un véhicule dont la chenille est formée d'une bande souple sans fin munie intérieurement d'au moins une rangée de plots situés dans le sens de la longueur de la bande, distants entre eux d'un pas constant et délimités chacun par deux faces transversales dans le sens de la longueur de la bande sans fin et deux faces latérales dans le sens de la largeur de la bande sans fin.

Dans le brevet français N°9313211, déposé le 5 novembre 1993 au nom du Demandeur, chaque plot a sensiblement la forme d'une pyramide au pied de laquelle est définie dans la bande sans fin au moins une piste de roulement. Les faces latérales et les faces transversales du plot sont planes et forment respectivement un angle compris entre 8 et 20° pour les faces latérales et entre 30 et 40° pour les faces transversales par rapport à un plan normal à la bande sans fin de la chenille. Les faces transversales et les faces latérales du plot se raccordent en outre chacune à la bande sans fin par une surface arrondie aboutissant à un rebord formant épaulement et situé à distance de la bande sans fin.

Grâce au dispositif d'entraînement de la chenille décrit dans le brevet précité, le Demandeur a obtenu un fonctionnement beaucoup plus sur de la chenille que celui des chenilles souples de l'art antérieur, dans lesquelles les faces transversales des plots avaient habituellement la forme d'une développante de cercle et engendraient des frottements importants.

En pratique, en plus de la roue motrice, le véhicule comprend un châssis supportant une roue de mise en tension de la chenille et une pluralité de roues de support de la charge.

Jusqu'à présent, il était considéré par l'homme du métier que les roues non motrices n'étaient pas réellement essentielles dans le bon fonctionnement de la chenille et qu'elles pouvaient avoir par conséquent une forme et des surfaces de roulement ne tenant pas rigoureusement compte de la forme des plots.

Au contraire, le Demandeur a observé que la forme des roues non motrices ainsi que leur surface de roulement influençaient considérablement la durabilité et les conditions de fonctionnement de la chenille, notamment en ce qui concernent les risques de déboîtement et les causes de frottement.

Le Demandeur s'est donc posé le problème d'améliorer encore le véhicule tout terrain à chenille souple du type précité, en optimisant notamment la structure des roues non motrices ainsi que d'autres éléments qui interagissent avec la chenille, de préférence en utilisant des éléments essentiellement simples, faciles à construire à un faible coût, et d'encombrement réduit.

La présente invention apporte une solution à ce problème.

Elle part d'un véhicule tout terrain à chenille souple du type précité.

Selon une définition générale de l'invention, la roue non motrice comporte au moins une surface de roulement propre à recevoir ladite piste de roulement de la bande sans fin, cette surface de roulement comportant au moins un prolongement qui s'étend radialement vers l'intérieur de la roue non motrice, ledit prolongement étant sensiblement parallèle à l'une des surfaces latérales des plots, de manière à former un jeu latéral limité allant s'élargissant du pied vers le sommet du plot.

On obtient ainsi un fonctionnement beaucoup plus sûr de la chenille que celui des chenilles souples de l'art antérieur, dans lesquelles les roues non motrices avaient habituellement des surfaces de roulement non adaptées à la forme des plots et engendraient des frottements importants et/ou des déboîtement de la chenille.

De plus, un tel agencement de la roue non motrice permet avantageusement de concentrer les efforts de guidage sur la base (pied) des plots, là où la surface de frottement est la plus importante. Il en résulte une usure moins importante de la chenille.

En pratique, la chenille comprend une ou plusieurs rangées de plots.

Lorsque la chenille comprend une seule rangée de plots situés entre deux pistes de roulement formées dans la bande sans fin, la roue non motrice comporte deux surfaces de roulement propres à recevoir respectivement les deux pistes de roulement, ces deux surfaces de roulement comportant chacune un prolongement qui s'étend radialement vers l'intérieur de la roue non motrice jusqu'à proximité de l'axe de la roue non motrice, en étant sensiblement parallèle à l'une des faces latérales des plots, de manière à former un jeu latéral limité allant s'élargissant du pied vers le sommet du plot.

Lorsque la chenille comprend au moins deux rangées de plots parallèles dans le sens de la largeur et de la longueur de la chenille et situées entre une piste de roulement formée dans la bande sans fin, la roue non motrice comporte une surface de roulement propre à recevoir la piste de roulement, cette surface de roulement comportant de chaque coté un prolongement qui s'étend radialement vers l'intérieur de la roue, l'un des prolongement étant sensiblement parallèle à une face latérale d'un plot d'une rangée et l'autre prolongement étant sensiblement parallèle à une face latérale d'un plot de l'autre rangée, de manière à former un jeu latéral limité allant s'élargissant du pied vers le sommet du plot.

La présente invention a également pour objet des moyens de mise en tension de la chenille associés à la roue de mise en tension de la chenille.

Selon un autre aspect de l'invention, le véhicule comprend un porte-roue de la roue de mise en tension comportant un organe de liaison apte à coulisser, selon le sens longitudinal du véhicule, dans un organe formant coulisse, fixe et solidaire du châssis du véhicule.

En pratique, l'organe de liaison mobile comprend un tiroir possédant un élément central et deux éléments latéraux propres à coulisser dans l'organe formant coulisse.

Selon un premier mode de réalisation, le porte-roue comprend une fourche à deux branches entre lesquelles l'axe de la roue de mise en tension est monté fixe en rotation, ladite fourche étant propre à supporter l'organe de liaison mobile.

Selon un second mode de réalisation dans lequel la chenille comprend une seule rangée de plots, le porte-roue comprend une bague entourant l'axe de la roue de mise en tension, ladite bague étant posée entre les deux surfaces de roulement de la roue de mise en tension, et propre à supporter l'organe de liaison mobile du porte-roue.

D'autres caractéristiques et avantages de l'invention apparaîtront à la lumière de la description détaillée ci-après, faite seulement à titre d'exemple et dans laquelle on se réfère aux dessins annexés sur lesquels:
- les figures 1A à 1D sont respectivement des vues de côté, de dessus, de face avant et de face arrière d'un véhicule à chenille à une seule rangée de plots et à trois roues de support selon l'invention;
- les figures 2A à 2D sont respectivement des vues de côté, de dessus, de face avant et de face arrière d'un véhicule à chenille à deux rangées de plots et à trois roues de support selon l'invention;
- la figure 3 est une vue partielle en perspective d'une chenille à une seule rangée de plots;
- la figure 4 est une vue de la face latérale d'un plot de la chenille de la figure 3;
- la figure 5 est une vue de la face frontale d'un plot de la chenille de la figure 3;
- la figure 6 est une vue partielle en perspective d'une chenille à deux rangées de plots;
- les figures 7 et 8 montrent différents trains de chenilles d'un véhicule selon l'invention;
- la figure 9 est une vue en coupe d'une roue de mise en tension de la chenille décrite en référence aux figures 1A à 1D selon l'invention;
- la figure 10 est une vue en coupe d'une roue de support de la chenille décrite en référence aux figures 1A à 1D selon l'invention;
- les figures 11A et 12A sont des vues en perspective d'un premier mode de réalisation des moyens de mise en tension de la chenille associés à la roue de mise en tension du véhicule décrit en référence aux figures 1A à 1D selon l'invention;
- les figures 11B et 12B sont des vues en perspective d'un second mode de réalisation des moyens de mise en tension de la chenille associés à la roue de mise en tension du véhicule décrit en référence aux figures 1A à 1D selon l'invention; et
- la figure 13 est une vue en perspective des moyens de mise en tension de la chenille associés à la roue de mise en tension du véhicule décrit en référence aux figures 2A à 2D selon l'invention.

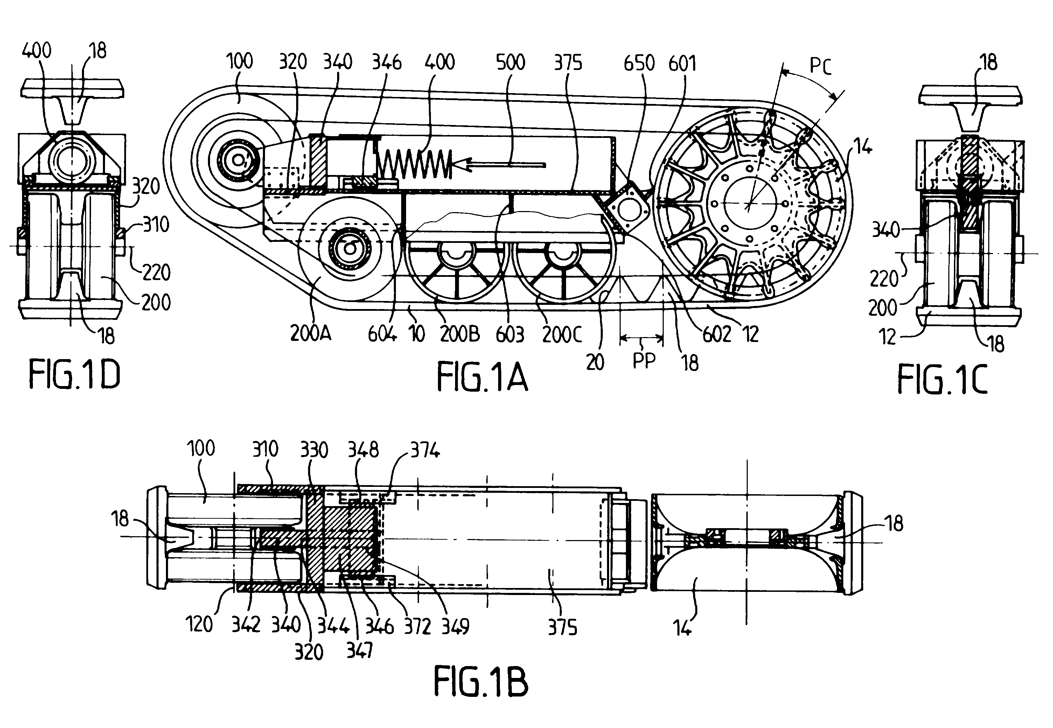

On se réfère tout d'abord aux figures 1A à 1D qui représentent un véhicule tout terrain à chenille souple selon l'invention comprenant au moins une chenille souple 10 s'enroulant autour d'une roue motrice 14, d'une roue de mise en tension de la chenille 100 et d'une pluralité de roues de support 200, individualisées en 200A à 200C. La version représentée en figures 1A à 1D comprend trois roues de support. Cette version est la plus compacte, compte tenu de l'encombrement des moyens de tension de la chenille que l'on décrira plus en détail ci-après. D'autres versions du véhicule peuvent être plus longues avec 4, 5, 6 ... roues de support 200.

La structure de train de la chenille du véhicule selon l'invention peut avoir plusieurs formes de réalisation.

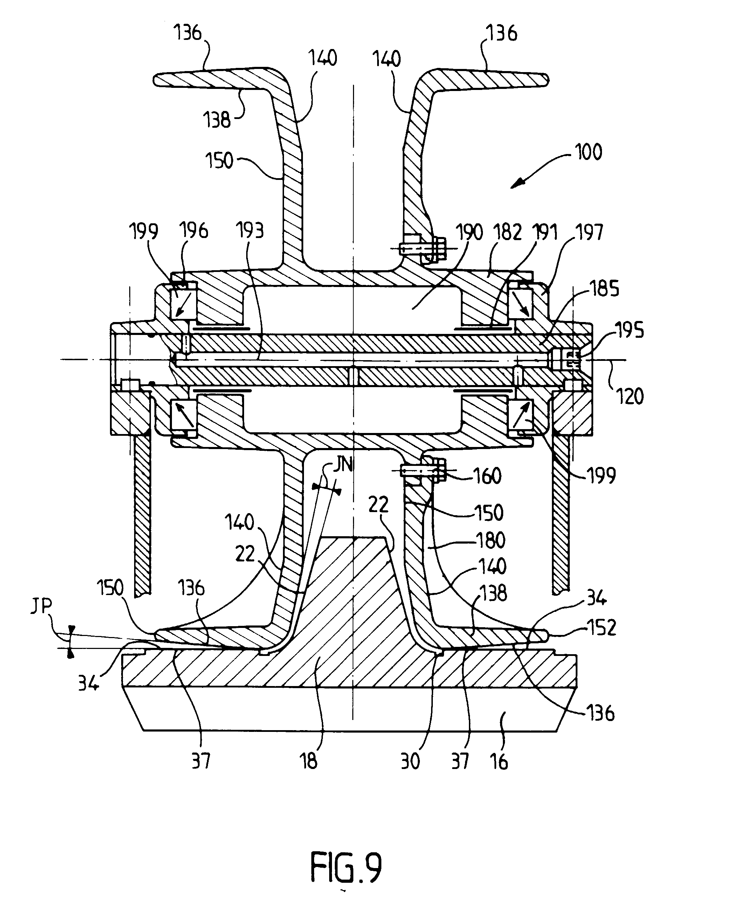

Par exemple, dans la forme de réalisation de la figure 7, la roue motrice 14, de diamètre D1 (par exemple 550 mm), est située à l'arrière d'un train 48, la chenille 10 passant autour d'une roue avant 100, non motrice, de diamètre D2 (par exemple 390 mm), et assurant la mise en tension de la chenille, et autour de trois roues supports 200, de diamètre D3 (par exemple 300mm) inférieur au diamètre D2 de la roue 100. Les roues de support 200 sont en contact avec le sol. La roue 100 est située au-dessus du plan des roues 200 et vers l'avant par rapport à la roue 14. La roue motrice est légèrement au dessus du sol. Les branches BR de la fourche (que l'on décrira plus en détail ci-après) supportant la roue 100 de mise en tension de la chenille sont parallèles au plan des roues 200.

Dans la forme de réalisation de la figure 8, la chenille 10 du train 50 passe autour d'une roue arrière 14, motrice, d'une roue avant 100 non motrice, de même diamètre D2 que celui de la roue 14 et trois roues supports 200 d'un diamètre D3 plus petit que celui de la roue 100. La roue motrice 14 est légèrement située au-dessus du plan des roues 100 et 200. Les branches BR de la fourche (que l'on décrira plus en détail ci-après) supportant la roue 100 de mise en tension de la chenille ne sont pas parallèles au plan des roues 100 et 200, mais forment angle de l'ordre de 45° par rapport au plan des roues 100 et 200. La roue 100 peut aussi être légèrement située au dessus du plan des roues 200.

On fait de nouveau référence aux figures 1A à 1D.

La chenille 10 est formée d'une bande souple sans fin 12 réalisée avantageusement en matériau élastomère, par exemple à base de caoutchouc naturel, renforcée intérieurement par des armatures non représentées.

Ces armatures sont obtenues, de façon en soi connue, par la superposition de nappes de matériau à chaîne et à trame comportant des fils métalliques ou synthétiques.

La bande sans fin 12 comporte extérieurement une surface de roulement avantageusement munie de crampons (non représentés).

La bande sans fin 12 est munie intérieurement d'au moins une rangée de plots 18 situés dans le sens de la longueur de la bande et distants entre eux d'un pas constant PP.

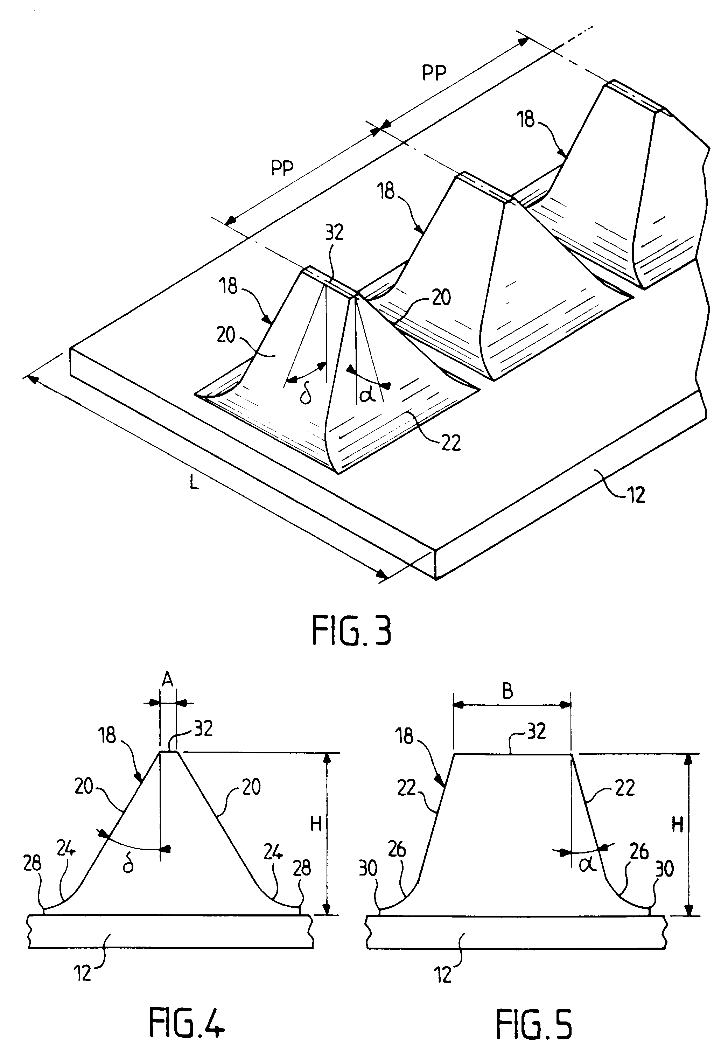

Comme on le voit plus particulièrement sur les figures 3 à 5, les plots 18 sont délimités chacun par deux faces transversales 20 s'étendant dans le sens de la largeur L de la bande 12 et par deux faces latérales 22 s'étendant dans le sens de la longueur de la bande 12.

Les faces transversales 20 des plots sont planes et forment un angle δ compris entre 30 et 40° par rapport à un plan normal à la bande de la chenille.

Les faces latérales 22 sont planes et forment un angle α compris entre 8 et 20° par rapport à un plan normal à la bande de la chenille.

Les faces transversales 20 et les faces latérales 22 peuvent se raccorder par des arêtes vives, comme représenté sur la figure 3, ou bien par des bords arrondis.

Les faces transversales 20 et les faces latérales 22 du plot se raccordent chacune à la bande sans fin par une surface arrondie 24, respectivement 26 aboutissant à un rebord 28, respectivement 30 formant épaulement et situé à distance de la bande sans fin. Il en résulte que chaque plot a une forme générale de pyramide dont la base se raccorde à la bande sans fin par un socle évasé, ce qui permet de répartir les contraintes subies par les plots lorsque la chenille est entraînée.

Comme on peut le voir également sur les figures 3 à 5, chaque plot 18 est tronqué de manière à former une face supérieure plane 32 de forme générale rectangulaire dont la plus grande dimension B s'étend dans le sens de la largeur L de la chenille et dont la plus petite dimension A s'étend dans le sens de la longueur de la chenille.

B est au moins égal à 15% de la largeur L de la chenille, tandis que A est compris entre 5 et 10 millimètres pour une hauteur H du plot comprise entre 50 et 90 millimètres.

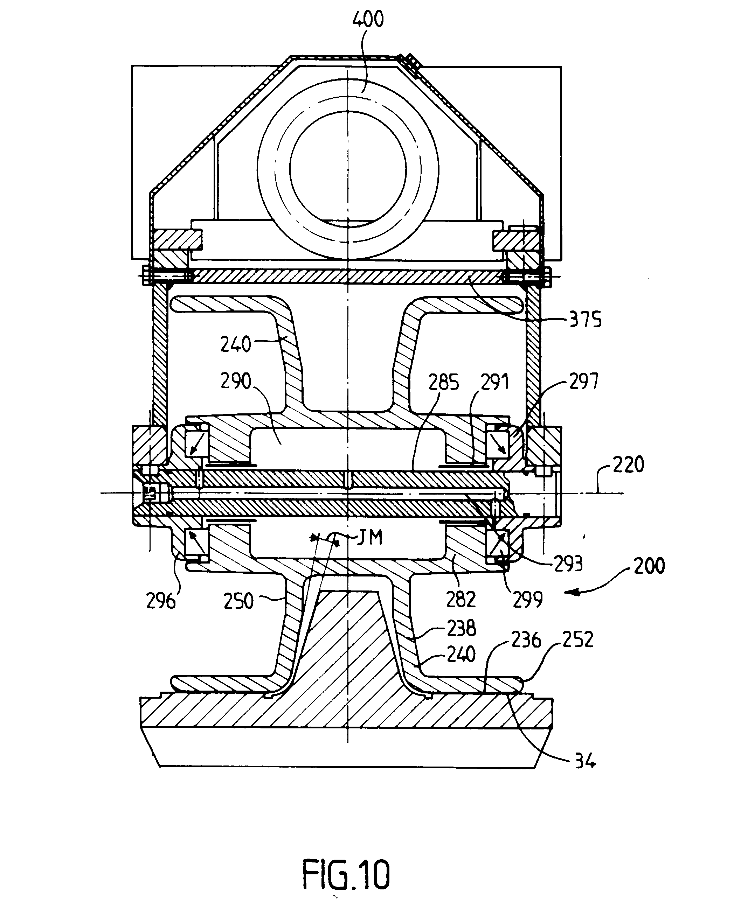

Dans la forme de réalisation des figures 1A à 1D ainsi que des figures 9 et 10, la rangée de plots 18 est située entre deux pistes de roulement 34 en forme de coussin 37 formées en surépaisseur à l'intérieur de la bande sans fin.

La roue motrice 14 est celle décrite dans le brevet précité.

En bref, elle comprend deux jantes réunies entre elles, à intervalles réguliers, par des taquets d'entraînement 42. Ces taquets sont disposés parallèlement entre eux à la périphérie de la roue et parallèlement aux génératrices de cette dernière.

Les taquets sont distants entre eux, au niveau de la périphérie de la roue motrice 14, d'un pas circonférentiel PC dont la valeur est comprise entre 93% et 100% de la valeur du pas des plots PP. Les taquets 42 sont destinés à venir s'engrener dans les espaces vides délimités entre les plots 18.

Sur les figures 1A à 1D, le diamètre extérieur de la roue 14 est désigné par D1.

Dans une gamme inférieure, on a H = 50 à 70 millimètres, D1 minimal = 250 à 300 millimètres et PP = 110 à 135 millimètres.

Dans une gamme supérieure, on a H = 70 à 90 millimètres, D1 minimal = 300 à 550 millimètres et PP = 120 à 155 millimètres.

Sur la figure 1, le diamètre extérieur de la roue 100 est désigné par D2.

Dans une gamme inférieure, on a H = 50 à 70 millimètres, D2 minimal = 250 à 300 millimètres et PP = 110 à 135 millimètres.

Dans une gamme supérieure, on a H = 70 à 90 millimètres, D2 minimal = 300 à 550 millimètres et PP = 120 à 155 millimètres.

Sur la figure 1, le diamètre extérieur des roues 200 est désigné par D3.

Dans une gamme inférieure, on a H = 50 à 70 millimètres, D3 minimal = 250 à 300 millimètres et PP = 110 à 135 millimètres.

Dans une gamme supérieure, on a H = 70 à 90 millimètres, D3 minimal = 260 à 550 millimètres et PP = 120 à 155 millimètres.

Comme déjà indiqué, la chenille est formée avantageusement d'un matériau élastomère muni d'armatures de renforcement. Ces armatures de renforcement s'étendent seulement dans l'épaisseur de la bande sans fin, et non pas à l'intérieur des plots 18.

Les plots 18 ont une dureté minimale de 65 Shore A, tandis que la bande 12 a une dureté minimale de 58 Shore A.

Dans les formes de réalisation décrites précédemment en référence aux figures 1 à 5, la chenille ne comporte qu'une seule rangée de plots située entre deux pistes de roulement et la roue comporte deux jantes offrant deux surfaces de roulement pour coopérer avec les deux pistes de roulement.

Il entre également dans le cadre de l'invention de réaliser des chenilles comportant plusieurs rangées de plots, ceux-ci étant réalisés suivant le même principe que décrit précédemment.

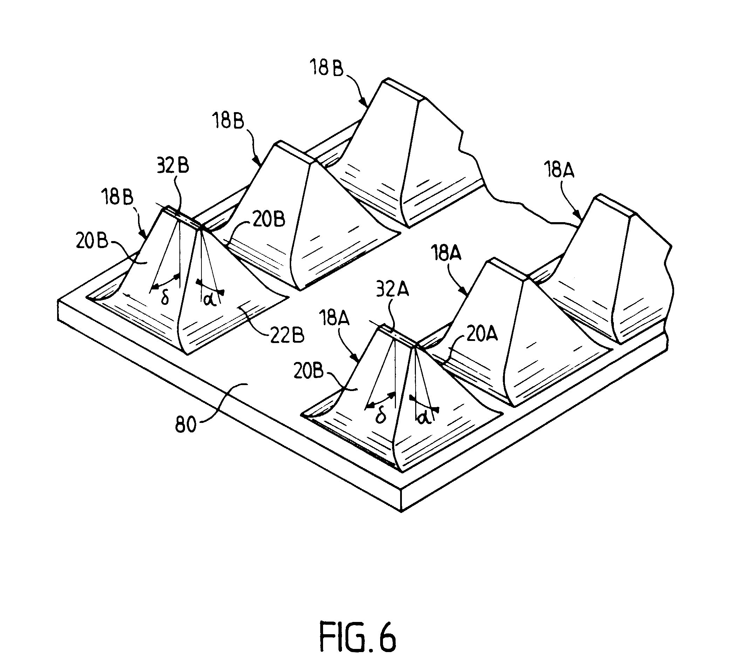

Par exemple, en référence à la figure 6, la chenille 10 comprend au moins deux rangées de plots 18 parallèles dans le sens de la largeur et dans le sens de la longueur de la chenille. Les plots des deux rangées portent les mêmes références que les plots de la figures 3 à 5 suivies de la lettre A pour l'une des rangées et de la lettre B pour l'autre rangée.

Les deux rangées de plots sont situées entre une piste de roulement 80 formée dans la bande sans fin.

On se réfère maintenant à la figure 9 relative à une roue non motrice 100 assurant la mise en tension d'une chenille à une seule rangée de plots.

La roue non motrice 100 comporte deux surfaces de roulement 136 propres à recevoir respectivement les deux pistes de roulement 34 des plots. Ces deux surfaces de roulement 136 font partie de deux jantes symétriques 138. Elles comportent chacune un prolongement 140 s'étendant radialement vers l'intérieur de la roue jusqu'à proximité de l'axe 120 de la roue. Les prolongements 140 sont sensiblement parallèles aux faces latérales 22 des plots et délimitent avec ces dernières un jeu latéral JN de valeur limitée, qui est compris entre 4 et 8 millimètres.

Avantageusement, le jeu latéral limité JN va s'élargissant du pied vers le sommet du plot. Un tel jeu permet de concentrer les efforts de guidage sur la base (pied) des plots, là où la surface de frottement est la plus importante. Il en résulte une usure moins importante de la chenille.

Chaque surface de roulement 136 de la roue non motrice 100 comprend un bord libre 152 dirigé vers l'intérieur de la roue par rapport à la surface de roulement 136. Les surfaces de roulement 136 et les pistes de roulement 34 ne sont donc pas rigoureusement parallèles mais avec un léger jeu JP allant s'élargissant du centre de la roue vers la périphérie de celle-ci.

Par exemple, le jeu JP est avantageusement compris entre 2 et 4 millimètres.

Lorsque la chenille est sous tension, ce jeu JP a tendance à diminuer pour s'annuler en cas de tension extrême.

Un tel jeu JP permet d'améliorer le guidage et le recentrage permanent de la chenille autour de la roue non motrice.

La partie 150 du prolongement 140 qui est proche de l'axe central 120 de la roue non motrice peut être parallèle à un plan normal à la bande sans fin de la chenille, ou bien former un angle choisi.

Avantageusement, chaque prolongement 140 est démontable, par exemple au niveau de la partie 150, à l'aide de moyens de fixation de type vis/écrou 160.

De préférence, chaque jante 138 formée par une surface de roulement 136 et son prolongement associé comprend en outre des moyens de soutien 180, par exemple en forme d'arc de cercle et disposés à l'extérieur de la jante.

La roue 100 de mise en tension de la chenille comprend un mécanisme de roulement classique. En bref, le mécanisme comprend un galet 182 monté fou de manière à tourner librement sur un arbre 185 et retenu sur ce dernier par deux éléments de blocage 197 montés selon un agencement serré sur les extrémités dudit arbre.

Les jantes 138 sont solidaires du galet fou 182.

Des bagues de roulement 191 sont prévues entre le galet fou 182 et l'arbre 185. Elles assurent le roulement du galet fou autour de l'arbre. Elles sont avantageusement en bronze.

Le galet fou comprend une chambre 190 contenant un lubrifiant.

L'arbre comporte un trou axial 193 qui est parallèle à l'axe 120 de rotation de la roue 100. Le trou axial 193 communique avec l'intérieur de la chambre à lubrifiant 190. Pour empêcher une sortie du lubrifiant, il est prévu un bouchon 195 qui est inséré à force ou vissé dans le conduit 193 lors du montage de la roue de mise en tension de la chenille

Des sièges 196, destinés à loger des moyens d'étanchéité 199, sont prévus au niveau du galet 182 et des moyens de blocage 197.

On se réfère maintenant à la figure 10 relative à une roue non motrice assurant le support d'une chenille à une seule rangée de plots.

La roue non motrice 200 comporte deux surfaces de roulement 236 propres à recevoir respectivement les deux pistes de roulement 34. Ces deux surfaces de roulement 236 font partie de deux jantes symétriques 238 et elles comportent chacune un prolongement 240 s'étendant radialement vers l'intérieur de la roue, jusqu'à proximité de l'axe 220 de la roue. Les prolongements 240 sont sensiblement parallèles aux faces latérales 22 des plots et délimitent avec ces dernières un jeu latéral JM de valeur limitée, qui est compris entre 4 et 8 millimètres.

Avantageusement, le jeu latéral limité JM va s'élargissant du pied vers le sommet du plot. Un tel jeu permet de concentrer les efforts de guidage sur la base (pied) des plots, là où la surface de frottement est la plus importante. Il en résulte une usure moins importante de la chenille.

Chaque surface de roulement 236 de la roue non motrice 200 comprend un bord libre 252.

Les surfaces de roulement 236 et les pistes de roulement 34 sont sensiblement parallèles.

La partie 250 du prolongement 240 qui est solidaire du galet fou 282, que l'on décrira plus en détail ci-après, peut être parallèle à un plan normal à la bande sans fin de la chenille, ou bien former un angle choisi.

La roue 200 de support comprend un mécanisme de roulement classique. En bref, le mécanisme comprend un galet 282 monté fou de manière à tourner librement sur un arbre 285 et retenu sur ce dernier par deux éléments de blocage 297 montés selon un agencement serré sur les extrémités dudit arbre.

Des bagues de roulements 291 sont prévues entre le galet fou 282 et l'arbre 285. Elles sont avantageusement en bronze.

Le galet fou comprend une chambre 290 contenant un lubrifiant.

L'arbre comporte un trou axial 293 qui est parallèle à l'axe 220 de rotation de la roue 200. Le trou axial 293 communique avec l'intérieur de la chambre à lubrifiant 290. Pour empêcher une sortie du lubrifiant, il est prévu un bouchon 295 qui est inséré à force ou vissé dans le conduit 293 lors du montage de la roue de mise en tension de la chenille.

Des sièges 296, destinés à loger des moyens d'étanchéité 299, sont prévus au niveau du galet 282 et des moyens de blocage 297.

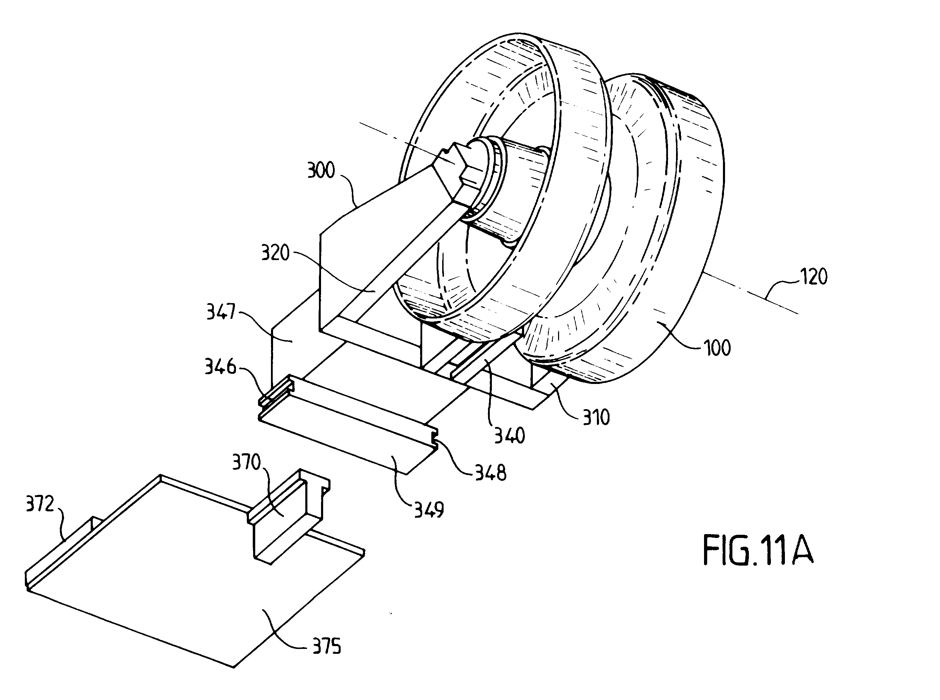

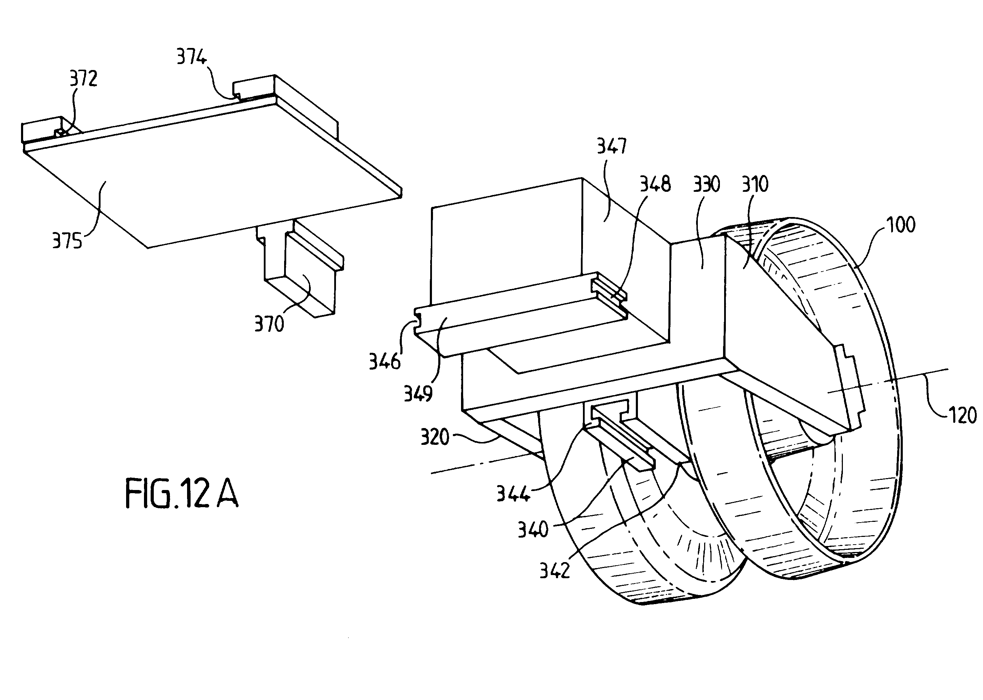

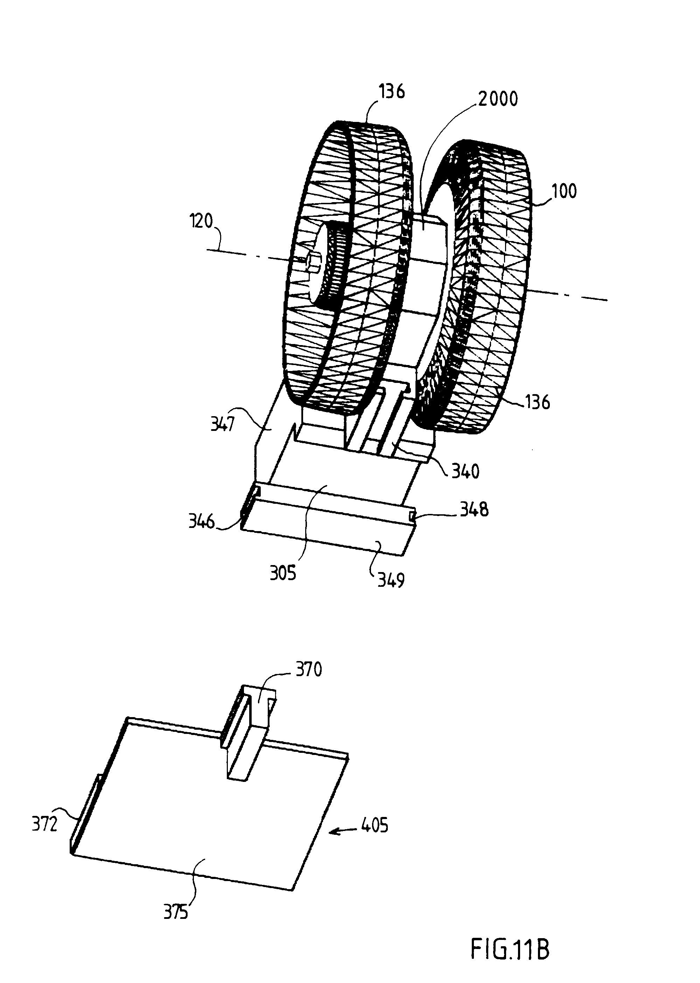

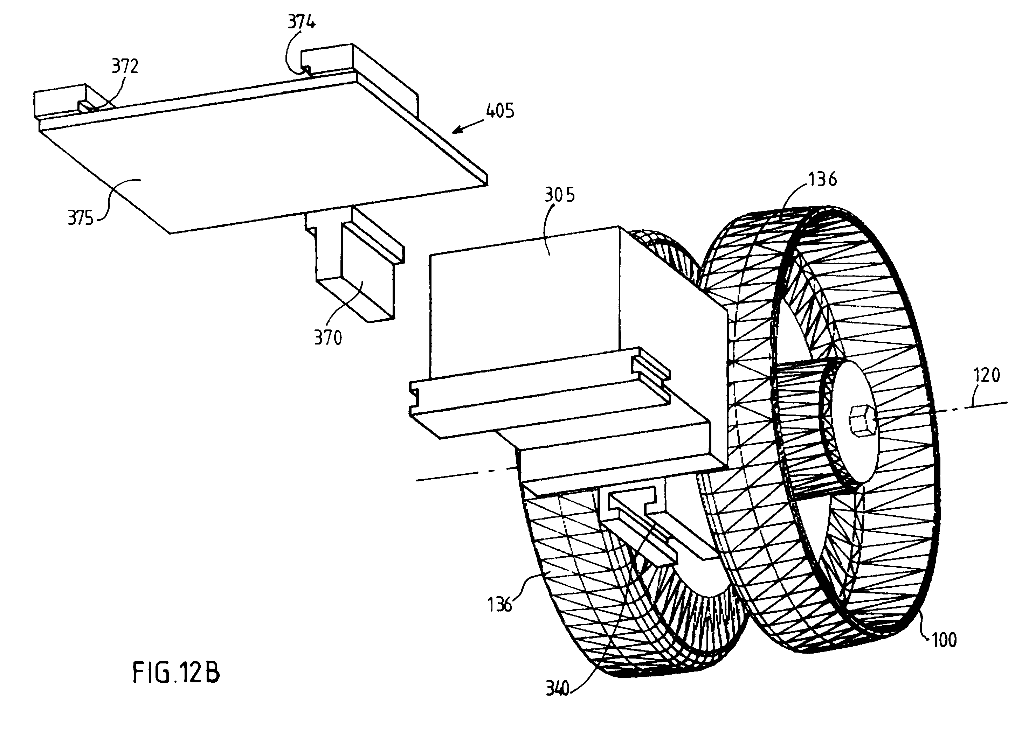

D'une façon générale, le véhicule comprend un système de mise en tension associé à la roue de mise en tension. Pour faciliter la compréhension du fonctionnement desdits moyens de tension, ces derniers sont représentés en grisés en référence aux figures 1A à 1D et en perspective en référence aux figures 11A et 12A, ainsi qu'aux figures 11B et 12B.

En pratique, le système de mise en tension comprend un porte-roue de ladite roue de mise en tension. Le porte-roue comprend un organe de liaison apte à coulisser, selon le sens longitudinal du véhicule, dans un organe formant coulisse, fixe, et solidaire du châssis du véhicule.

En référence aux figures 11A et 12A, le porte-roue possède une fourche 300 formant support de la roue de mise en tension 100. La fourche 300 comporte deux branches 310 et 320 entre lesquelles l'axe 120 de la roue de mise en tension 100 est monté fixe.

L'organe de liaison comprend un tiroir 305 possédant un élément central 340 disposé dans le sens longitudinal. Cet élément central 340 joue le rôle d'une pièce mobile ayant la forme générale d'une rainure en T.

Pour réduire l'encombrement du véhicule et reprendre les efforts de tension, l'extrémité 342 de la rainure 340 est disposée à proximité de l'axe 120 de la roue, par exemple entre les deux surfaces de roulement 136 de la roue 100.

L'autre extrémité 344 de la rainure 340 s'étend jusqu'à la partie 330 de la fourche 300 reliant les deux branches 310 et 320.

Le tiroir 305 comprend en outre des éléments latéraux en saillie 346 et 348 dans le sens longitudinal. Ces éléments latéraux sont prévus pour coulisser dans un organe formant coulisse 405 comportant deux glissières latérales longitudinales 372 et 374 portées par une plaque fixe 375, qui forme le fond du châssis du véhicule recouvrant les roues de support 200. Les éléments en saillie 346 et 348 sont mobiles et ont chacun une forme générale de U. Les deux éléments mobiles 346 et 348 sont portés par une plaque 349 solidaire de la fourche 300 par l'intermédiaire d'un élément parallélépipédique 347 sur le fond duquel la plaque 349 est fixée. La plaque 349 est disposée dans le sens transversal du véhicule. La dimension transversale de la plaque 349 est sensiblement inférieure à la dimension transversale du châssis du véhicule.

Un élément 370, fixe, en saillie, solidaire de la plaque fixe 375 est prévu pour coopérer avec la rainure 340, mobile.

Un mécanisme tendeur/amortisseur est prévu pour tendre la chenille et amortir ladite tension en cas de choc sur la chenille, d'ondulations ou cahots de la chaussée.

Par exemple, le mécanisme tendeur/amortisseur comprend à système amortisseur à ressorts 400 et un système tendeur à vérin 500 fixé sur la plaque 375. La tige du vérin pousse les éléments mobiles 340, 346, 348 de la fourche dans les glissières longitudinales 370, 372 et 374 du châssis du véhicule.

En référence aux figures 11B et 12B, le système de mise en tension est légèrement modifié par rapport à celui décrit en référence aux figures 11A et 11B. Les modifications portent sur le porte-roue qui comprend une bague 2000 au lieu de la fourche.

La bague entoure l'axe 120 de la roue de mise en tension. La bague est disposée entre les deux surfaces de roulement 136 de la roue de mise en tension 100. L'organe de liaison 305 formé par le tiroir à rainure 340 est supporté par la bague 2000.

Avantageusement, la bague est démontable, sous la forme de deux mâchoires par exemple.

L'avantage de la bague 2000 par rapport à la fourche réside dans la réduction de l'encombrement du véhicule et dans la facilité du montage/démontage de la roue de mise en tension.

De préférence, à chaque roue motrice ou non motrice est associé un mécanisme grattoir 600 solidaire du châssis et disposé à une distance choisie de la roue associée.

Par exemple, à proximité de la roue motrice 14, est prévu un premier grattoir 601 dont l'extrémité libre est à une distance choisie de la surface de roulement de la roue motrice. Il en est de même pour les roues non motrices avec des grattoir 602, 603, 604.

Un système à pivot 650 classique est prévu entre la roue motrice 14 et la roue support 200C.

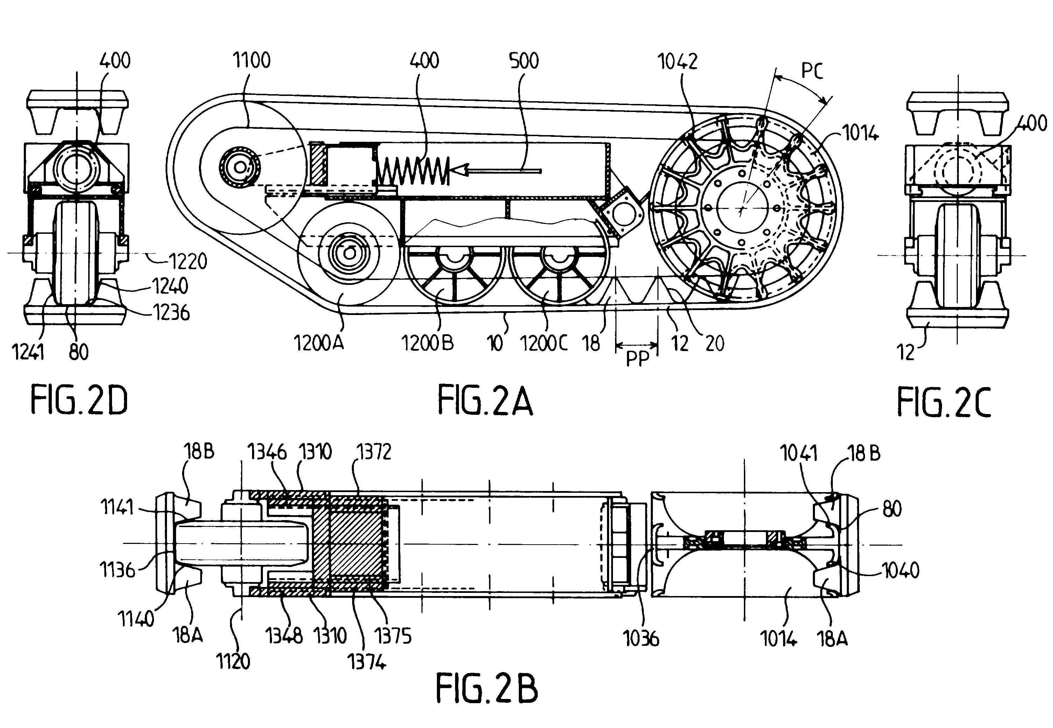

En référence aux figures 2A à 2D, il entre également dans le cadre de l'invention de réaliser des chenilles comportant plusieurs rangées de plots comme décrits en référence à la figure 6, les roues motrice et non motrice ainsi que les moyens de mise en tension de la chenille étant réalisés suivant le même principe que décrit précédemment.

En bref, lorsque la chenille comprend au moins deux rangées de plots parallèles dans le sens de la largeur et de la longueur de la chenille, les deux rangées sont situées entre une piste de roulement 80 formée dans la bande sans fin (figure 6).

Les roues de support 1200 (ainsi que la roue motrice 1014 ou la roue de mise en tension 1100) comporte une surface de roulement 1036 (ou 1136 pour la roue 1014 ou 1236 pour la roue 1200) propre à recevoir la piste de roulement 80.

Cette surface de roulement 1036 (ou 1136 ou 1236) comporte deux prolongements 1040 et 1041 (ou 1140 et 1141, ou 1240 et 1241) qui s'étendent radialement vers l'intérieur de la roue.

Le prolongement 1040, 1140 ou 1240 est sensiblement parallèle à une face latérale 22A d'un plot 18A d'une rangée, de manière à former un jeu latéral limité allant s'élargissant du pied vers le sommet de chaque plot.

Le prolongement 1041, 1141 ou 1241 est sensiblement parallèle à une face latérale 22B d'un plot 18B de l'autre rangée, de manière à former un jeu latéral limité allant s'élargissant du pied vers le sommet de chaque plot.

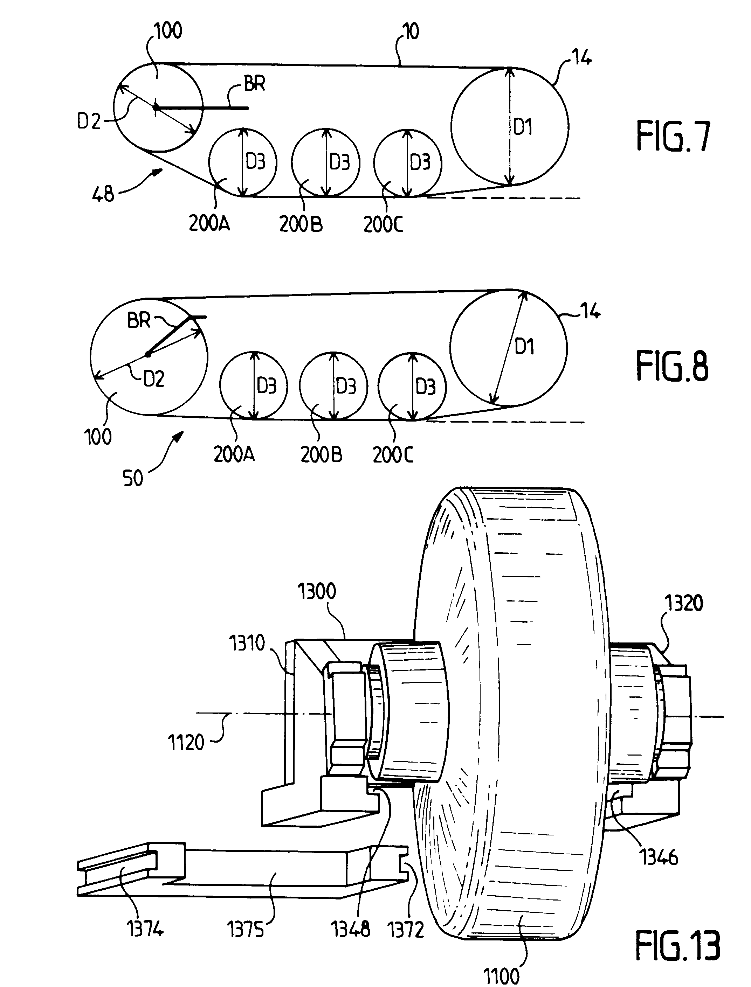

En référence à la figure 13, le système de mise en tension associé à une roue 1100 autour de laquelle s'enroule une chenille à deux rangées comprend une fourche 1300 formant support de la roue de mise en tension 1100. La fourche 1300 comporte deux branches 1310 et 1320 entre lesquelles l'axe 1120 de la roue de mise en tension est monté fixe en rotation.

Chaque branche supporte une rainure en saillie, mobile, 1346 pour la branche 1310, et 1348 pour la branche 1320. Ces rainures sont destinées à coulisser dans des glissières latérales longitudinales portées par une plaque 1375, fixe et solidaire du châssis du véhicule.

Par rapport aux rainures 346 et 348 décrites en référence aux figures 11A et 12A, les rainures 1346 et 1348 sont plus proches de l'axe de la roue de mise en tension. Dans ces conditions, les moyens de mise en tension 1300 sont dépourvus d'élément central mobile à la différence des moyens de mise en tension décrits en référence aux figures 11A et 12A.

L'invention trouve une application particulière aux engins et véhicules tout terrain de structure légère, notamment pour l'agriculture, la viticulture, l'ostréiculture, les secteurs des travaux publics et forestiers.

## Revendications

1. Véhicule tout terrain à chenille souple, comprenant au moins une chenille (10) formée d'une bande souple sans fin (12) munie intérieurement d'au moins une rangée de plots (18) situés dans le sens de la longueur de la bande, distants entre eux d'un pas constant (PP) et délimités chacun par deux faces transversales (20) dans le sens de la longueur de la bande sans fin et deux faces latérales (22) dans le sens de la largeur de la bande sans fin, ainsi qu'au moins une roue non motrice (100, 200) sur laquelle s'enroule la chenille, chaque plot (18) ayant sensiblement la forme d'une pyramide au pied de laquelle est définie dans la bande sans fin au moins une piste de roulement (34), caractérisé en ce que la roue non motrice (100, 200) comporte au moins une surface de roulement (36) propre à recevoir ladite piste de roulement (34) de la bande sans fin, cette surface de roulement comportant au moins un prolongement (40) qui s'étend radialement vers l'intérieur de la roue non motrice, ledit prolongement étant sensiblement parallèle à l'une des surfaces latérales (22) des plots, de manière à former un jeu latéral (JN) limité allant s'élargissant du pied vers le sommet du plot.

2. Véhicule selon la revendication 1, dans lequel la chenille comprend une seule rangée de plots situés entre deux pistes de roulement (34) formées dans la bande sans fin, caractérisé en ce que la roue non motrice (100, 200) comporte deux surfaces de roulement (36) propres à recevoir respectivement les deux pistes de roulement (34), ces deux surfaces de roulement comportant des prolongements (40) qui s'étendent radialement vers l'intérieur de la roue jusqu'à proximité de l'axe central de la roue non motrice (120, 220), en étant sensiblement parallèles aux faces latérales (22) des plots, de manière à former un jeu latéral limité (JN) allant s'élargissant du pied vers le sommet du plot.

3. Véhicule selon la revendication 1, caractérisé en ce que la chenille comprend au moins deux rangées de plots (18A, 18B) parallèles dans le sens de la largeur et de la longueur de la chenille, les deux rangées de plots étant situées entre une piste de roulement (80) formée dans la bande sans fin, caractérisé en ce que la roue non motrice (1100, 1200) comporte une surface de roulement (1136, 1236) propre à recevoir la piste de roulement (80), cette surface de roulement comportant de chaque coté un prolongement (1140, 1141, 1240, 1241) qui s'étend radialement vers l'intérieur de la roue, l'un des prolongements étant sensiblement parallèle à une face latérale d'un plot (18A) d'une rangée et l'autre prolongement étant sensiblement parallèle à une face latérale d'un plot (18B) de l'autre rangée, de manière à former un jeu latéral limité allant s'élargissant du pied vers le sommet de chaque plot.

4. Véhicule selon la revendication 2, dans laquelle la roue non motrice est une roue de mise en tension (100) de la chenille, caractérisé en ce que chaque surface de roulement (136) de la roue comprend un bord libre (150) dirigé vers l'intérieur de la roue par rapport à la surface de roulement, les surfaces de roulement 136 et les pistes de roulement 34 étant sensiblement parallèles, avec un léger jeu JP allant s'élargissant du centre de la roue vers la périphérie de celle-ci, pour améliorer le recentrage permanent et le guidage de la chenille autour de la roue.

5. Véhicule selon la revendication 1 dans lequel chaque surface de roulement (136) et son prolongement (140) associé constitue la jante (138) de la roue non motrice, caractérisé en ce que chaque jante (138) comprend des moyens de soutien (180) disposés à l'extérieur de la jante.

6. Véhicule selon la revendication 5, caractérisé en ce que chaque jante (138) est démontable.

7. Véhicule selon la revendication 1, dans lequel la roue non motrice est la roue de mise en tension (100) de la chenille, caractérisé en ce qu'il comprend un porte-roue de ladite roue de mise en tension comportant un organe de liaison (305) apte à coulisser, selon le sens longitudinal du véhicule, dans un organe formant coulisse (405), fixe et solidaire du châssis du véhicule.

8. Véhicule selon la revendication 7, caractérisé en ce que l'organe de liaison mobile (305) comprend un tiroir possédant un élément central (340) et deux éléments latéraux propres à coulisser dans l'organe formant coulisse (405).

9. Véhicule selon la revendication 7, caractérisé en ce que le porte-roue comprend une fourche (300, 1300) à deux branches entre lesquelles l'axe de la roue de mise en tension est monté fixe en rotation, ladite fourche étant propre à supporter l'organe de liaison mobile (305).

10. Véhicule selon la revendication 2 et la revendication 7, caractérisé en ce que le porte-roue comprend une bague ou analogue (2000) entourant l'axe (120) de la roue de mise en tension (100), ladite bague étant disposée entre les deux surfaces de roulement (136) de la roue de mise en tension (100), et propre à supporter l'organe de liaison mobile (305).

11. Véhicule selon la revendication 10, caractérisé en ce que la bague (2000) est démontable.

12. Véhicule selon la revendication 7 caractérisé en ce qu'il comprend en outre un mécanisme tendeur/amortisseur (400, 500) solidaire de l'organe formant coulisse (405) pour tendre la chenille et amortir ladite tension de la chenille.

13. Véhicule selon l'une quelconque des précédentes revendications, caractérisé en ce qu'à chaque roue motrice ou non motrice est associée un mécanisme grattoir (600) solidaire du châssis et disposé à une distance choisie de la roue associée.
